(19) 

Europäisches
Patentamt
European
Patent Office
Office européen
des brevets

(11)  **EP 3 222 735 B1**

(12)  **EUROPEAN PATENT SPECIFICATION**

(45) Date of publication and mention
of the grant of the patent:
**24.07.2019 Bulletin 2019/30**

(51) Int Cl.:
**C22B 3/38** *(2006.01)*     **C22B 3/00** *(2006.01)*
**C22B 26/22** *(2006.01)*

(21) Application number: **17161716.0**

(22) Date of filing: **17.03.2017**

(54) **METHOD OF SEPARATING COBALT AND MAGNESIUM FROM A NICKEL-BEARING EXTRACTION FEED SOLUTION**

VERFAHREN ZUR TRENNUNG VON COBALT UND MAGNESIUM AUS EINER NICKELHALTIGEN EXTRAKTIONSZUFÜHRLÖSUNG

PROCÉDÉ DE SÉPARATION DE COBALT ET DE MAGNÉSIUM À PARTIR D'UNE SOLUTION D'ALIMENTATION D'EXTRACTION CONTENANT DU NICKEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2016 FI 20160070**

(43) Date of publication of application:
**27.09.2017 Bulletin 2017/39**

(73) Proprietor: **NORILSK NICKEL HARJAVALTA OY 29200 Harjavalta (FI)**

(72) Inventors:
• **LUOMA, Rauno**
  **28220 Pori (FI)**
• **OJA, Arja**
  **28400 Ulvila (FI)**

(74) Representative: **Berggren Oy, Helsinki & Oulu P.O. Box 16 Eteläinen Rautatiekatu 10A 00101 Helsinki (FI)**

(56) References cited:
**US-A- 4 376 653     US-A- 5 855 858**

• **BOURGET C ET AL: "CYANEX(R) 301 binary extractant systems in cobalt/nickel recovery from acidic sulphate solutions", HYDROMETALLURGY, ELSEVIER SCIENTIFIC PUBLISHING CY. AMSTERDAM, NL, vol. 77, no. 3-4, 1 June 2005 (2005-06-01) , pages 203-218, XP027652523, ISSN: 0304-386X [retrieved on 2005-06-01]**

**EP 3 222 735 B1**

**Description**

The invention relates to a method according to the preamble of claim 1 for separating cobalt and magnesium from a nickel-bearing extraction feed solution.

Such a method has been described for example by C. Bourget at al. in Hydrometallurgy 77 (2005), p. 203 - 218. Relevant processes are also known from US 4 376 653 A and US 5 855 858 A. The hydrometallurgical refinement of nickel from impure raw materials into various pure nickel products comprises typically sub-processes such as: dissolution, solution purification, and manufacture of products. Raw materials for the refinement process may include nickel matte which is a product from smelting sulfidic nickel concentrates, an intermediate product from the hydrometallurgical refinement of various nickel ores, and/or secondary nickel compounds as byproducts from the refinement of other metals, and/or nickel-bearing recycled materials.

The present invention relates generally speaking to a method of treating cobalt-, magnesium- and nickel-containing aqueous solutions in a manner to provide separate aqueous solutions containing primarily cobalt, magnesium and nickel. Thus, the cobalt and magnesium are extracted from the nickel-containing aqueous solution into separate aqueous solutions containing primarily cobalt and magnesium and into a cobalt- as well as magnesium-free, nickel-containing aqueous solution.

The method according to the invention comprises separating cobalt, magnesium and nickel from each other with liquid-liquid extraction. The liquid-liquid extraction is commonly employed as a solution purification process for cleaning impurity metals from the dissolution-generated nickel solution prior to the manufacture of nickel products. Cobalt, magnesium and nickel make their way to a hydrometallurgical refinement process in raw materials and/or bulk supplies, whereby these metals end up in the nickel solution generated in dissolution. From the standpoint of the quality of nickel and cobalt products and the functionality of processes it is important to enable cobalt, magnesium and nickel to be separated from each other. Concentrations of these metals vary in the solution, depending on the employed raw material, bulk supplies, and pretreatment processes used for the same.

For separating cobalt and nickel from each other exist generally a wide variety of processing options, one of which is described as follows.

In liquid-liquid extraction processes based on a cation-exchange mechanism, metals pass from aqueous solutions into a water-insoluble or poorly water-soluble organic extraction solution according to a simplified chemical equation (1) as follows, the top line representing the organic solution

$$Me^{2+} + 2\overline{HA} \Leftrightarrow \overline{MeA_2} + 2H^+ \qquad\qquad (1)$$

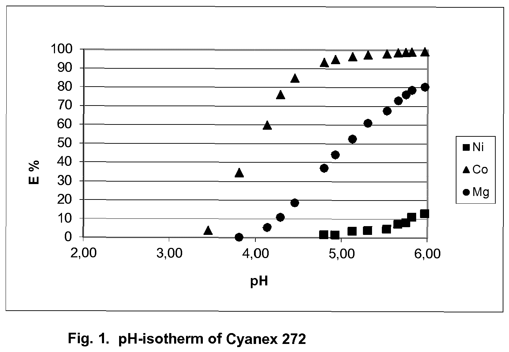

According to the chemical equation (1), the equilibrium concentrations of element speciations in the extraction reaction are primarily determined by pH of the aqueous solution, and for each metal can be determined a specific pH-isotherm. Fig. 1 shows how the metal extraction rate settles at each pH with Cyanex 272 as extraction reagent.

When the employed extraction reagent is bis(2,4,4-trimethylpentyl)phosphinic acid, for example Cyanex 272, as in fig. 1, the extraction of cobalt from an aqueous nickel solution is typically carried out at a pH value higher than 5 at which the extraction rate of cobalt is high and the extraction rate of nickel is low. In this case, however, some nickel and more magnesium become co-leached into the resulting extraction solution. Nickel is recovered from an extraction solution by washing the extraction solution with a cobalt-containing aqueous solution while pH is 4-5 and by returning the wash water to the extraction stage. In this case, however, most of the magnesium is also washed into the aqueous solution and tags along behind the nickel.

In currently employed liquid-liquid extraction methods, it is indeed difficult to enable the separation of magnesium from nickel, which in prior known liquid-liquid extractions restricts the nickel-magnesium mass ratio (Ni/Mg) of a feed solution to the value of not lower than 500. This limits the use of magnesium-containing raw materials and bulk supplies.

With the foregoing problem as a starting point, the invention had a main objective of providing a liquid-liquid extraction method based on a cation-exchange mechanism, which would enable a thorough separation of magnesium out of an aqueous solution in such a manner that it does not follow the nickel into a raffinate or the cobalt into a product solution even if the extraction feed solution has a nickel-magnesium mass ratio (Ni/Mg) lower than 500.

The invention relates to a method which comprises treating cobalt-, magnesium- and nickel-bearing aqueous solutions with liquid-liquid extraction so as to provide separate aqueous solutions containing primarily cobalt, magnesium and nickel.

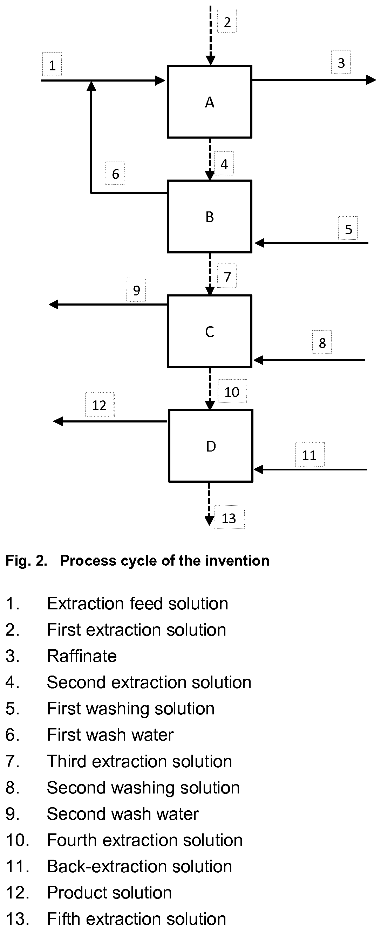

More specifically, the invention relates to the method of fig. 2 for treating a cobalt-, magnesium- and nickel-bearing extraction feed solution 1 with liquid-liquid extraction, wherein a first extraction solution 2 contains some cation-exchange extraction reagent insoluble or poorly soluble in said extraction feed solution 1.

The method according to the invention is defined in claim 1. It comprises at least the following method stages enabling cobalt and magnesium to be separated from a nickel-bearing extraction feed solution:

- in an extraction stage A, a cobalt-, magnesium- and nickel-containing extraction feed solution is extracted with a first extraction solution for providing a cobalt-, magnesium- and nickel-loaded second extraction solution and a primarily nickel-containing raffinate,

- in a washing stage B, the cobalt-, magnesium- and nickel-loaded second extraction solution is washed in a countercurrent fashion with a water-, cobalt- and sulfuric acid-containing first washing solution whose pH is 0,5-5 for providing a primarily cobalt- and magnesium-loaded third extraction solution and a primarily nickel-containing first wash water,

- in a washing stage C, the primarily cobalt- and magnesium-loaded third extraction solution is washed in a countercurrent fashion with a water-, cobalt- and sulfuric acid-containing second washing solution whose pH is 0,5-5 for providing a primarily cobalt-loaded fourth extraction solution and a primarily magnesium-containing second wash water,

In a preferred embodiment of the invention, the method further comprises a back-extraction stage D, in which the primarily cobalt-loaded fourth extraction solution is back-extracted with an aqueous solution of sulfuric acid or with an aqueous solution of some other mineral acid, i.e. with a back-extraction solution, whose acid content is 30-300 g/L, for providing a fifth extraction solution substantially free of metals and a primarily cobalt-containing product solution. In a method according to the invention, the extraction feed solution, the first wash water and the second wash water are aqueous solutions.

The washing solutions, the back-extraction solution and the product solution are also aqueous solutions.

The aqueous solution of sulfuric acid can be replaced by using for example an aqueous solution of nitrogen acid or hydrochloric acid.

With the above-defined process stages A-D of liquid-liquid extraction, the magnesium- and nickel-bearing aqueous solutions are processed with extraction in a manner to provide aqueous solutions which contain primarily cobalt, magnesium and nickel.

The concept "primarily" is used in this disclosure in reference to the state of affairs that the solutions of the invention, such as wash water, extraction solution, feed solution, product solution, etc., do not contain significant amounts of metals other than the one just defined separable from each other with the method. Thus, what is indicated for example with a primarily nickel-containing raffinate is that the raffinate does not have significant amounts of other metals (Mg, Co, Ni) than nickel (Ni) that can be separated with the method. Respectively, for example the concept "a primarily cobalt- and magnesium-loaded third extraction solution" indicates that the extraction solution does not have a significant amount of nickel.

According to the invention, the extraction reagent in the feed solution for a first extraction solution is bis(2,4,4-trimethylipentyl)phosphinic acid.

The method according to the invention comprises separating cobalt, magnesium and nickel from each other. The extraction method according to the invention is based on bringing an aqueous solution with a content of metal salts, an extraction feed solution 1, in the extraction stage A into a blending contact with an extraction solution, whereby the cobalt and the magnesium, as well as some of the nickel, become extracted into the extraction solution and, after this stage, the aqueous solution is a nickel solution, a raffinate 3, which has been purified of magnesium and cobalt.

The extraction stage A is followed by conducting the extraction solution to two washing stages B, C cross-currently linked relative to each other, the washing solution employed therein being a mixture of water, cobalt and sulfuric acid. The first washing stage B comprises washing nickel out of the extraction solution and the product resulting therefrom is a first wash water 6 which contains nickel and some magnesium. The first wash water 6 can be conducted into the extraction feed solution 1 which is on its way to the extraction stage A. The second washing stage C comprises washing magnesium out of the extraction solution and the obtained product is a second wash water 9 which contains magnesium, as well as some cobalt and nickel. From this solution it is further possible to recover the cobalt and the nickel by means of a separate subprocess.

The washing stages B and C are followed by a back-extraction of cobalt from the extraction solution into the aqueous solution in a back-extraction stage D by lowering the pH value of this stage for example with sulfuric acid or some other mineral acid. In said back-extraction stage D, the primarily cobalt-loaded fourth extraction solution is back-extracted with an aqueous solution of sulfuric acid or with an aqueous solution of some other mineral acid, i.e. with a back-extraction solution, whose acid content is 30-300 g/L, for providing a fifth extraction solution substantially free of metals and a primarily cobalt-containing product solution.

In one preferred embodiment of the invention, the primarily nickel sulfate-containing first wash water can also be conducted to some process other than the liquid-liquid extraction process defined above in the extraction, washing and back-extraction stages (A, B, C and D).

In another preferred embodiment of the invention, the primarily magnesium sulfate-containing second wash water is conducted to some process other than the liquid-liquid extraction process defined in the extraction, washing and back-extraction stages (A, B, C and D).

A benefit of the presently developed method with respect to prior known liquid-liquid extraction methods used for separating cobalt and nickel resides in the capability of washing the co-extracting magnesium in isolation from cobalt and nickel and thus enabling a separation of cobalt, magnesium and nickel from each other in one and the same process. Cobalt, magnesium and nickel can be separated from each other for three discrete aqueous solution streams, whereby magnesium does not contaminate either a cobalt-containing product solution 12 or the nickel-containing raffinate 3 and therefrom is obtained a separate aqueous solution, the second wash water 9. This in turn increases a possibility of using magnesium-bearing raw materials and bulk supplies for the manufacture of pure nickel products.

A considerable benefit specifically attained with the invention is that in a nickel-containing aqueous solution (raffinate) the nickel-magnesium and nickel-cobalt mass ratios can be brought to a value higher than 500, in a cobalt-containing aqueous solution the cobalt-magnesium and cobalt-nickel mass ratios can be brought to a value higher than 1000, as well as in a magnesium-containing aqueous solution the magnesium-nickel and magnesium-cobalt mass ratios can be brought to a value higher than 10.

In one preferred embodiment of the invention, the extraction feed solution 1 has a nickel-magnesium mass ratio (Ni/Mg) of not lower than 70, but lower than 500.

The nickel-magnesium mass ratio (Ni/Mg) in the extraction feed solution 1 can be 70 at its lowest, i.e. it is possible to thereby reduce the nickel-magnesium mass ratio (Ni/Mg) of the extraction feed solution 1 available for use in a liquid-liquid extraction method of the invention to become considerably lower than in prior known methods.

In one preferred embodiment of the invention, the extraction stage A includes one or more extraction steps, which involve extracting cobalt and magnesium from the extraction feed solution at a pH range 4-6, preferably at a pH value 5,5.

According to the invention, the washing of an extraction solution respectively in the washing stages B and C comprises one or more washing steps, wherein said respective extraction solution is washed with a washing solution containing water, cobalt and sulfuric acid. Preferably, the washing process of an extraction solution with a washing solution both in washing stage B and in washing stage C comprises several washing steps with a target pH of 3-5. In washing stage C, the target pH is nevertheless lower than in washing stage B.

Generally speaking, what has been described in the invention is a liquid-liquid extraction method, which enables a nickel sulfate solution to be relieved of cobalt and magnesium, present therein as impurities, to provide separate flows of aqueous solution. The cobalt extraction is accompanied by a co-extraction of magnesium and some nickel into the extraction solution when using acidic phosphorus-containing extraction reagents such as Cyanex 272 (cf. fig. 1). In a method of the invention, the magnesium and nickel extracted into an extraction solution are washed out of the extraction solution prior to the back-extraction stage of cobalt. The extraction solution washing stage is divided into two separate stages, in each of which stages the employed washing solution will be a mixture of water, cobalt and sulfuric acid. In these separate washing stages, the extraction solution is washed to first remove nickel and then magnesium. It is by a pH adjustment of the washing stage that enables a desired metal to be selectively washed out of the extraction solution. The result is a nickel-containing first wash water 6 with some magnesium content and a magnesium-containing second wash water 9 with some cobalt and nickel content.

The invention will now be described in more detail with reference to the accompanying figures.

Fig. 1 shows pH isotherms of Cyanex 272 for cobalt, magnesium and nickel.

Fig. 2 shows a process cycle for one liquid-liquid extraction process of the invention.

The extraction feed solution 1 is an aqueous solution which contains cobalt, magnesium and nickel in bivalent ions while the counterion is a sulfate ion or some other ion. The extraction feed solution 1 can have for example a nickel content of 50-140 g/L. a magnesium content of 0,1-2 g/L, and a cobalt content of 0-5 g/L. In addition, the aqueous solution may contain other impurities such as sodium, calcium, copper, zinc, manganese and iron.

The extraction reagent, which is used in a water-insoluble aqueous solution, is a cation-exchange extraction reagent such as bis(2,4,4-trimethylpentyl)phosphinic acid with a trade name Cyanex 272 (manufactured by Cytec Solvay Group). The pH isotherms of Cyanex 272 are shown in fig. 1 for various metals. The extraction reagent has been diluted into kerosene or some other appropriate organic inert solvent poorly soluble in water.

The method has a process cycle consistent with fig. 2. Various stages A, B, C and D of the process cycle may comprise one of more steps or extraction units.

The extraction feed solution 1, which contains impurities, is conducted to the extraction stage A, wherein cobalt and magnesium are extracted into a first extraction solution 2. In an ion-exchange reaction of the extraction stage, the cobalt and magnesium ions, as well as some of the nickel ions, produce a water-insoluble organometallic complex with an extraction reagent and the acidity-inducing hydrogen ion, released from the extraction reagent into an aqueous solution, is neutralized with an appropriate neutralizing agent such as ammonia. The aqueous solution leaving the extraction stage A is referred to as a raffinate 3 and it is an aqueous solution of nickel sulfate purified of cobalt and magnesium.

From the extraction stage A, a cobalt-, magnesium- and nickel-loaded second extraction solution 4 passes to the washing stage B, wherein it is washed in a countercurrent fashion with a water-, cobalt- and sulfuric acid-containing first washing solution 5 whose pH has been adjusted to the range of 0,5-5. In addition to this, each step of the washing stage B may include an adjustment of pH with sulfuric acid water. The steps have a target pH within the range of 3-5. The nickel loaded in the second extraction solution 4 is replaced with cobalt and the first wash water 6 has primarily nickel left therein. The some cobalt- and magnesium-containing first wash water 6, leaving this stage, can be conducted either to the extraction stage A by combining it with the extraction feed solution 1 of the extraction stage A as shown in the process cycle of fig. 2, or to some other treatment, i.e. outside the liquid-liquid extraction process shown in fig. 2.

A third extraction solution 7 has a very low content of loaded nickel after the washing stage B, and it is next conducted to the washing stage C, wherein it is washed in a countercurrent manner with a water-, cobalt- and sulfuric acid-containing second washing solution 8 whose pH has been adjusted to the range of 0,5-5. In addition to this, each step of the washing stage C may include an adjustment of pH with sulfuric acid water. The steps have a target pH within the range of 3-5, yet lower than in the washing stage B. At this point, the magnesium, loaded in the third extraction solution 7 arriving at the washing stage C, and the rest of the nickel, will be replaced with cobalt. The second wash water 9 leaving the washing stage C contains magnesium as well as small amounts of cobalt and nickel. This impure, magnesium-containing aqueous solution is treated in a process other than those defined in stages A, B, C and D.

A fourth extraction solution 10, leaving the washing stage C, has a content of loaded cobalt, but neither magnesium nor nickel, and it is conducted to the back-extraction stage D. In this stage, the cobalt is back-extracted with a back-extraction solution 11, which contains water and sulfuric acid or some other mineral acid, thereby providing a cobalt-containing extraction product solution 12 and a fifth extraction solution 13 free of metals, the latter circulating back to the start of the process and being brought to a blending contact with the extraction feed solution 1 arriving in the extraction stage A.

## Example 1

Implementation of extraction stage A

In laboratory, a continuous mixer-clarifier pilot extraction apparatus was used for testing the extraction of magnesium with different numbers of steps (4 or 6) and by changing (0,7 and 1,0) of the external phase ratio (O/A). Table 1 presents metal concentrations in various tests for an aqueous solution, i.e. a raffinate 3, leaving the extraction stage A. Based on these experiments, it is possible to extract magnesium to a concentration of less than 100 mg/l of a solution that has a nickel content of 113 g/l and a nickel-magnesium mass ratio (Ni/Mg) of 100, by using either more steps or a higher external phase ratio.

Table 1. Test results for extraction stage A with a continuous mixer-clarifier pilot extraction apparatus. Analyses of raffinate 3 and nickel extraction rate ($E_{Ni}$) of extraction stage A. In tests, the metal concentrations of extraction feed solution were: Co 1,7 g/l, Mg 1,1 g/l ja Ni 113 g/l.

| Test | $[Co]_{aq}$ mg/l | $[Mg]_{aq}$ mg/l | $[Ni]_{aq}$ g/l | $E_{Ni}$ % |
|---|---|---|---|---|
| 1 | 0 | 12 | 106 | 6,3 |
| 2 | 0 | 14 | 98 | 5,6 |
| 3 | 2 | 76 | 99 | 16,8 |
| 4 | 2 | 55 | 104 | 5,2 |

## Example 2

Implementation of washing stage B and washing stage C

In laboratory, a continuous mixer-clarifier pilot extraction apparatus was used for testing the washing in two stages of an extraction solution loaded with metals. Both the washing stage B and the washing stage C were supplied with a washing solution specifically prepared therefor. Both washing stages B and C were made of three washing steps: washing stage B of washing steps W1, W2 and W3, as well as washing stage C of washing steps W4, W5 and W6. Analyses for first and second washing solutions 5 and 8, pH for first and second wash waters 6 and 9, as well as analyses for second, third and fourth extraction solutions 4, 7 and 10 are presented in Table 2. Metal concentrations for first and second wash waters 6 and 9, leaving the washing stages B and C, are presented in Table 3. Based on these experiments, it is possible to wash magnesium and nickel selectively off into separate aqueous solutions from the cobalt-containing second and third extraction solutions 4 and 7.

Table 2. Test results for washing stages B and C with a continuous mixer-clarifier pilot extraction apparatus. W3 as well as W6 refer to the final washing steps of washing stages B and C, respectively. As for extraction solution, the subindex E1 refers to a second extraction solution 4 arriving in washing stage B, and W6 respectively to a fourth extraction solution 10 leaving the final washing step of washing stage C. Analyses for first and second washing solutions 5 and 8, pH for first and second wash waters 6 and 9, as well as analyses for second and fourth extraction solutions.

| Test | First washing solution 5 W1,W2,W3 | | Second washing solution 8 W4,W5,W6 | | W3 | W6 | Extraction solution | | | | | | | |
|---|---|---|---|---|---|---|---|---|---|---|---|---|---|---|
| | $[Co]_{aq}$ mg/l | pH | $[Co]_{aq}$ mg/l | pH | pH | pH | $[Ni]_{org\ E1}$ mg/l | $[Ni]_{org\ W6}$ mg/l | $W_{Ni}$ % | $[Mg]_{org\ E1}$ mg/l | $[Mg]_{org\ W6}$ mg/l | $W_{Mg}$ % | $[Co]_{org\ E1}$ mg/l | $[Co]_{org\ W6}$ mg/l |
| 5 | 8 646 | 0,8 | 8 646 | 0,8 | 4,66 | 3,94 | 2 001 | 13 | 99,3 | 1 513 | 63 | 95,8 | 2 479 | 3 288 |
| 6 | 8 043 | 0,8 | 8 838 | 1,2 | 4,56 | 3,85 | 2 307 | 10 | 99,6 | 1 349 | 26 | 98,1 | 2 160 | 3 262 |
| 7 | 10 445 | 0,8 | 11 346 | 1,2 | 4,83 | 3,95 | 3 315 | 8 | 99,8 | 2 165 | 34 | 98,4 | 2 449 | 6 510 |
| 8 | 11 466 | 0,8 | 10 715 | 1,2 | 4,86 | 3,16 | 3 162 | 6 | 99,8 | 2 239 | 28 | 98,8 | 2 427 | 6 277 |
| 9 | 10 297 | 0,8 | 11 298 | 1,2 | 5,22 | 2,64 | 3 717 | 22 | 99,4 | 2 037 | 56 | 97,2 | 1 712 | 6 067 |

**Table 3. Test results for washing stage B and C with a continuous mixer-clarifier pilot extraction apparatus. Metal concentrations for first and second wash waters leaving washing stages B and C.**

| Test | First wash water 6 | | | Second wash water 9 | | |
|---|---|---|---|---|---|---|
| | $[Co]_{aq}$ mg/l | $[Mg]_{aq}$ mg/l | $[Ni]_{aq}$ mg/l | $[Co]_{aq}$ mg/l | $[Mg]_{aq}$ mg/l | $[Ni]_{aq}$ mg/l |
| 5 | 72 | 1 392 | 12 091 | 875 | 6 601 | 193 |
| 6 | 75 | 1 649 | 11 060 | 1 363 | 5 832 | 209 |
| 7 | 20 | 442 | 15 654 | 14 453 | 5 397 | 368 |
| 8 | 19 | 514 | 11 982 | 686 | 8 702 | 884 |
| 9 | 8 | 203 | 13 758 | 467 | 6 870 | 6 059 |

**Example 3**

Implementation of back-extraction stage D

In laboratory, a continuous mixer-clarifier pilot extraction apparatus was used for testing back-extraction of cobalt after washing stage C from fourth extraction solution 10. Back-extraction was conducted with an aqueous solution of sulfuric acid with an acid content of 50-100 g/l. Analyses for a product solution 12 leaving the back-extraction stage D, and amount-of-matter ratios for metals calculated therefrom, are presented in Table 4. As can be seen from the results, this method and the numbers of washing steps presented in the preceding paragraph enabled an attainment in cobalt-nickel mass ratio (Co/Ni) of a value higher than 3000 and in cobalt-magnesium mass ratio (Co/Mg) a value higher than 600.

**Table 4. Test results for back-extraction stage D with a continuous mixer-clarifier pilot extraction apparatus. Metal analyses for a product solution 12 leaving the back-extraction stage D, as well as amount-of-matter ratios for metals in the solution.**

| Test | $[Co]_{aq}$ mg/l | $[Mg]_{aq}$ mg/l | $[Ni]_{aq}$ mg/l | $n_{Co}/n_{Mg}$ | $n_{Co}/n_{Ni}$ |
|---|---|---|---|---|---|
| 5 | 7 599 | 133 | 6 | 57 | 1 267 |
| 6 | 12 081 | 19 | 7 | 636 | 1 726 |
| 7 | 16 388 | 17 | 100 | 964 | 164 |
| 8 | 19 972 | 13 | 6 | 1 536 | 3 329 |
| 9 | 16 414 | 623 | 18 | 26 | 912 |

**Claims**

1. A method of separating cobalt and magnesium from a nickel-bearing extraction feed solution (1) with liquid-liquid extraction, wherein a first extraction solution (2) contains, as an extraction reagent, a bis(2,4,4-trimethylpentyl)phosphinic acid, which is insoluble or poorly soluble in said feed solution (1), **characterized in that** the method comprises at least the following method stages enabling cobalt, magnesium and nickel to be separated into discrete aqueous solution streams:

   - in an extraction stage (A), the aqueous cobalt-, magnesium- and nickel-containing extraction feed solution (1) is extracted with the first extraction solution (2) containing as an extraction agent, a bis(2,4,4-trimethylpentyl)phosphinic acid, for providing a cobalt-, magnesium- and nickel-loaded second extraction solution (4) and a primarily nickel-containing aqueous raffinate (3),
   - in a washing stage (B), the cobalt-, magnesium- and nickel-loaded second extraction solution (4) is washed in a countercurrent fashion with a primarily cobalt- and sulfuric acid-containing first aqueous washing solution (5) whose pH is 0,5-5, wherein said washing of second extraction solution (4) comprises several washing steps whose target pH is 3-5, for providing a primarily cobalt- and magnesium-loaded third extraction solution (7) and a primarily nickel-containing first wash water (6),

- in a washing stage (C), the primarily cobalt- and magnesium-loaded third extraction solution (7) is washed in a countercurrent fashion with a water-, cobalt- and sulfuric acid-containing second aqueous washing solution (8) whose pH is 0,5-5 wherein said washing of third extraction solution (7) comprises several washing steps whose target pH is 3-5, yet lower than in the washing steps of the washing stage (B) for providing a primarily cobalt-loaded fourth extraction solution (10) and a primarily magnesium-containing second wash water (9), and
- in a back-extraction stage (D), the primarily cobalt-loaded fourth extraction solution (10) is back-extracted with an aqueous solution of sulfuric acid or with an aqueous solution of some other mineral acid, i.e. with a back-extraction solution (11), whose acid content is 30-300 g/L, for providing a fifth extraction solution (13) substantially free of metals and a primarily cobalt-containing aqueous product solution (12).

2. A method according to claim 1, **characterized in that** the fifth extraction solution (13) free of metals is reused as a first extraction solution (2) in the extraction stage (A).

3. A method according to claim 1 or 2, **characterized in that** the extraction feed solution (1), the raffinate (3), the first wash water (6), the second wash water (9), the washing solutions, the back-extraction solution (11) and the product solution (12) are aqueous solutions.

4. A method according to claim 1, **characterized in that** the extraction feed solution (1) has a nickel-magnesium mass ratio (Ni/Mg) which is not lower than 70 but lower than 500.

5. A method according to any of the preceding claims, **characterized in that**, in the washing stages (B) and (C), respectively, the washing of the second and third extraction solutions (4, 7) comprises one or more washing steps, wherein said respective second and third extraction solutions (4, 7) are washed with water-, cobalt- and sulfuric acid-containing first and second washing solutions (5, 8).

6. A method according to claim 5, **characterized in that** the washing of the second extraction solution (4) in the washing stage (B) with the first washing solution (5) comprises several washing steps whose target pH is 3-5.

7. A method according to claim 5, **characterized in that** the washing of the third extraction solution (7) in the washing stage (C) with the second washing solution (8) comprises several washing steps whose target pH is 3-5, yet lower than in the washing steps of the washing stage (B).

8. A method according to any of claims 5-7, **characterized in that** each washing stage (B, C) is divided into three successive washing steps.

9. A method according to any of claims 5-8, **characterized in that** pH of the washing steps is adjusted with an aqueous solution of sulfuric acid.

10. A method according to any of the preceding claims, **characterized in that** the first extraction solution (2) contains, as an extraction reagent, alkylphosphinic acid and a water-insoluble or poorly water-soluble solvent.

11. A method according to claim 10, **characterized in that** the extraction reagent for the first extraction solution (2) is bis(2,4,4-trimethylpentyl)phosphinic acid.

12. A method according to any of the preceding claims, **characterized in that** the primarily nickel-containing first wash water (6), obtained from the first washing stage (B), is combined with the extraction feed solution (1) for the extraction stage (A).

13. A method according to any of the preceding claims 1-11, **characterized in that** the primarily nickel-containing first wash water (6), obtained from the first washing stage (B), is conducted to some other process than the liquid-liquid extraction process defined above in the extraction, washing, and back-extraction stages (A, B, C and D).

14. A method according to any of the preceding claims, **characterized in that**, in the extraction stage (A), the extraction feed solution (1) is brought to a blending contact with the first extraction solution (2) and, at the same time, pH is adjusted to above 4, preferably to the range of 4-6, in one or more steps.

15. A method according to any of the preceding claims, **characterized in that** the extraction feed solution (1) contains cobalt, magnesium and nickel cations while the counterion is a sulfate ion.

**Patentansprüche**

1. Verfahren zur Trennung von Cobalt und Magnesium aus einer nickelhaltigen Extraktionszuführlösung (1) mit Flüssig-Flüssig-Extraktion, wobei eine erste Extraktionslösung (2) als Extraktionsmittel eine bis(2,4-5-Trimethylpentyl)phosphinsäure enthält, die in der Zuführlösung (1) nicht oder schwerlöslich ist, **dadurch gekennzeichnet, dass** das Verfahren zumindest die folgenden Verfahrensstufen umfasst, mit denen sich Cobalt, Magnesium und Nickel in separate wässrige Lösungsströme auftrennen lassen:

   - in einer Extraktionsstufe (A) wird die wässrige Cobalt, Magnesium und Nickel enthaltende Extraktionszuführlösung (1) mit der ersten Extraktionslösung (2) extrahiert, die als Extraktionsmittel eine bis(2,4,4-Trimethylpentyl)phosphinsäure enthält, damit eine mit Cobalt, Magnesium und Nickel beladene zweite Extraktionslösung (4) und ein vorrangig Nickel enthaltendes wässriges Raffinat (3) bereitgestellt werden,
   - in einer Waschstufe (B) wird die mit Cobalt, Magnesium und Nickel beladene zweite Extraktionslösung (4) im Gegenstrom mit einer vorrangig Cobalt und Schwefelsäure enthaltenden ersten wässrigen Waschlösung (5) gewaschen, deren pH 0,5 bis 5 beträgt, wobei das Waschen der zweiten Extraktionslösung (4) mehrere Waschschritte umfasst, deren Ziel-pH 3 bis 5 beträgt, damit eine vorrangig mit Cobalt und Magnesium beladene dritte Extraktionslösung (7) und ein vorrangig Nickel enthaltendes erstes Waschwasser (6) bereitgestellt werden,
   - in einer Waschstufe (C) die vorrangig mit Cobalt und Magnesium beladene dritte Extraktionslösung (7) im Gegenstrom mit einer Wasser, Cobalt und Schwefelsäure enthaltenden zweiten wässrigen Waschlösung (8) gewaschen wird, deren pH 0,5 bis 5 beträgt,
   wobei das Waschen der dritten Extraktionslösung (7) mehrere Waschschritte umfasst, deren Ziel-pH 3 bis 5 beträgt, jedoch geringer ist als in den Waschschritten von Waschstufe (B), damit eine vorrangig mit Cobalt beladene vierte Extraktionslösung (10) und ein vorrangig Magnesium enthaltendes zweites Waschwasser (9) bereitgestellt werden, und
   - in einer Rückextraktionsstufe (D) wird die vorrangig mit Cobalt beladene vierte Extraktionslösung (10) mit einer wässrigen Schwefelsäurelösung oder mit einer wässrigen Lösung einer anderen Mineralsäure rückextrahiert, d.h. mit einer Rückextraktionslösung (11), deren Säuregehalt 30 bis 300 g/l beträgt, damit eine fünfte Extraktionslösung (13), die im Wesentlichen keine Metalle aufweist, und eine vorrangig Cobalt enthaltende wässrigen Produktlösung (12) bereitgestellt werden.

2. Verfahren nach Anspruch 1, **dadurch gekennzeichnet, dass** die fünfte Extraktionslösung (13) ohne Metalle als erste Extraktionslösung (2) in der Extraktionsstufe (A) wiederverwendet wird.

3. Verfahren nach Anspruch 1 oder 2, **dadurch gekennzeichnet, dass** die Extraktionszuführlösung (1), das Raffinat (3), das erste Waschwasser (6), das zweite Waschwasser (9), die Waschlösungen, die Rückextraktionslösung (11) und die Produktlösung (12) wässrige Lösungen sind.

4. Verfahren nach Anspruch 1, **dadurch gekennzeichnet, dass** die Extraktionszuführlösung (1) ein Massenverhältnis Nickel-Magnesium (Ni/Mg) aufweist, das nicht unter 70, jedoch unter 500 liegt.

5. Verfahren nach einem der vorhergehenden Ansprüche, **dadurch gekennzeichnet, dass** in der Waschstufe (B) beziehungsweise (C) das Waschen der zweiten und dritten Extraktionslösung (4, 7) einen oder mehrere Waschschritte umfasst, wobei die zweite beziehungsweise dritte Extraktionslösung (4, 7) mit der Wasser, Cobalt und Schwefelsäure enthaltenden ersten und zweiten Waschlösung (5, 8) gewaschen wird.

6. Verfahren nach Anspruch 5, **dadurch gekennzeichnet, dass** das Waschen der zweiten Extraktionslösung (4) in der Waschstufe (B) mit der ersten Waschlösung (5) mehrere Waschschritte umfasst, deren Ziel-pH 3 bis 5 beträgt.

7. Verfahren nach Anspruch 5, **dadurch gekennzeichnet, dass** das Waschen der dritten Extraktionslösung (7) in der Waschstufe (C) mit der zweiten Waschlösung (8) mehrere Waschschritte umfasst, deren Ziel-pH 3 bis 5 beträgt, jedoch geringer ist als in den Waschschritten von Waschstufe (B).

8. Verfahren nach einem der Ansprüche 5 bis 7, **dadurch gekennzeichnet, dass** jede Waschstufe (B, C) in drei aufeinanderfolgende Waschschritte unterteilt ist.

9. Verfahren nach einem der Ansprüche 5 bis 8, **dadurch gekennzeichnet, dass** der pH der Waschschritte mit einer wässrigen Schwefelsäurelösung eingestellt wird.

10. Verfahren nach einem der vorhergehenden Ansprüche, **dadurch gekennzeichnet, dass** die erste Extraktionslösung (2) als Extraktionsmittel Alkylphosphinsäure und ein in Wasser unlösliches oder in Wasser schwerlösliches Lösungsmittel enthält.

11. Verfahren nach Anspruch 10, **dadurch gekennzeichnet, dass** das Extraktionsmittel für die erste Extraktionslösung (2) bis(2,4,4-Trimethylpentyl)phosphinsäure ist.

12. Verfahren nach einem der vorhergehenden Ansprüche, **dadurch gekennzeichnet, dass** das vorrangig Nickel enthaltende erste Waschwasser (6), das aus der ersten Waschstufe (B) erhalten wird, mit der Extraktionszuführlösung (1) für die Extraktionsstufe (A) vereinigt wird.

13. Verfahren nach einem der vorhergehenden Ansprüche 1 bis 11, **dadurch gekennzeichnet, dass** das vorrangig Nickel enthaltende erste Waschwasser (6), das aus der ersten Waschstufe (B) erhalten wird, einem anderen Vorgang als dem zuvor definierten Flüssig-Flüssig-Extraktionsvorgang in der Extraktions-, Wasch- und Rückextraktionsstufe (A, B, C und D) zugeführt wird.

14. Verfahren nach einem der vorhergehenden Ansprüche, **dadurch gekennzeichnet, dass** die Extraktionszuführlösung (1) in der Extraktionsstufe (A) mit der ersten Extraktionslösung (2) in Mischungskontakt gebracht wird und gleichzeitig der pH in einem oder mehreren Schritten auf über 4, vorzugsweise im Bereich von 4 bis 6 eingestellt wird.

15. Verfahren nach einem der vorhergehenden Ansprüche, **dadurch gekennzeichnet, dass** die Extraktionszuführlösung (1) Cobalt-, Magnesium- und Nickelkationen enthält, während das Gegenion ein Sulfation ist.

## Revendications

1. Procédé de séparation de cobalt et de magnésium à partir d'une solution d'alimentation d'extraction (1) comportant du nickel avec une extraction liquide-liquide, dans lequel une première solution d'extraction (2) contient, en tant que réactif d'extraction, un acide bis(2,4,4-triméthylpentyl)phosphinique, qui est insoluble ou peu soluble dans ladite solution d'alimentation (1), **caractérisé en ce que** le procédé comprend au moins les stades du procédé suivants permettant la séparation du cobalt, du magnésium et du nickel en des courants de solution aqueuse discrets :

   - dans un stade d'extraction (A), la solution aqueuse d'alimentation d'extraction (1) contenant du cobalt, du magnésium et du nickel est extraite avec la première solution d'extraction (2) contenant, en tant que réactif d'extraction, un acide bis(2,4,4-triméthylpentyl)phosphinique, pour fournir une deuxième solution d'extraction (4) chargée en cobalt, magnésium et nickel et un raffinat aqueux (3) contenant principalement du nickel,
   - dans un stade de lavage (B), la deuxième solution d'extraction (4) chargée en cobalt, magnésium et nickel est lavée d'une manière à contre-courant avec une première solution aqueuse de lavage (5) contenant principalement du cobalt et de l'acide sulfurique dont le pH est de 0,5 à 5, dans lequel ledit lavage de la deuxième solution d'extraction (4) comprend plusieurs étapes de lavage dont le pH est de 3 à 5, pour fournir une troisième solution d'extraction (7) chargée principalement en cobalt et magnésium et une première eau de lavage (6) contenant principalement du nickel,
   - dans un stade de lavage (C), la troisième solution d'extraction (7) chargée principalement en cobalt et magnésium est lavée d'une manière à contre-courant avec une seconde solution aqueuse de lavage (8) contenant de l'eau, du cobalt et de l'acide sulfurique dont le pH est de 0,5 à 5 dans lequel ledit lavage de la troisième solution d'extraction (7) comprend plusieurs étapes de lavage dont le pH est de 3 à 5, cependant inférieur à celui des étapes de lavage du stade de lavage (B) pour fournir une quatrième solution d'extraction (10) chargée principalement en cobalt et une seconde eau de lavage (9) contenant principalement du magnésium, et
   - dans un stade de réextraction (D), la quatrième solution d'extraction (10) chargée principalement en cobalt est réextraite avec une solution aqueuse d'acide sulfurique ou avec une solution aqueuse d'un autre acide minéral, c'est-à-dire avec une solution de réextraction (11), dont la teneur en acide est de 30 à 300 g/L, pour fournir une cinquième solution d'extraction (13) sensiblement exempte de métaux et une solution aqueuse de produit (12) contenant principalement du cobalt.

2. Procédé selon la revendication 1, **caractérisé en ce que** la cinquième solution d'extraction (13) exempte de métaux est réutilisée en tant que première solution d'extraction (2) dans le stade d'extraction (A).

3. Procédé selon la revendication 1 ou 2, **caractérisé en ce que** la solution d'alimentation d'extraction (1), le raffinat (3), la première eau de lavage (6), la seconde eau de lavage (9), les solutions de lavage, la solution de réextraction (11) et la solution de produit (12) sont des solutions aqueuses.

4. Procédé selon la revendication 1, **caractérisé en ce que** la solution d'alimentation d'extraction (1) a un rapport en masse nickel-magnésium (Ni/Mg) qui n'est pas inférieur à 70 mais inférieur à 500.

5. Procédé selon l'une quelconque des revendications précédentes, **caractérisé en ce que**, dans les stades de lavage (B) et (C) respectivement, le lavage des deuxième et troisième solutions d'extraction (4, 7) comprend une ou plusieurs étapes de lavage, dans lequel lesdites deuxième et troisième solutions d'extraction (4, 7) respectives sont lavées avec les première et seconde solutions de lavage (5, 8) contenant de l'eau, du cobalt et de l'acide sulfurique.

6. Procédé selon la revendication 5, **caractérisé en ce que** le lavage de la deuxième solution d'extraction (4) dans le stade de lavage (B) avec la première solution de lavage (5) comprend plusieurs étapes de lavage dont le pH cible est de 3 à 5.

7. Procédé selon la revendication 5, **caractérisé en ce que** le lavage de la troisième solution d'extraction (7) dans le stade de lavage (C) avec la deuxième solution de lavage (8) comprend plusieurs étapes de lavage dont le pH cible est de 3 à 5, cependant inférieur à celui des étapes de lavage du stade de lavage (B).

8. Procédé selon l'une quelconque des revendications 5 à 7, **caractérisé en ce que** chaque stade de lavage (B, C) est divisé en trois étapes de lavage successives.

9. Procédé selon l'une quelconque des revendications 5 à 8, **caractérisé en ce que** le pH des étapes de lavage est ajusté avec une solution aqueuse d'acide sulfurique.

10. Procédé selon l'une quelconque des revendications précédentes, **caractérisé en ce que** la première solution d'extraction (2) contient, en tant que réactif d'extraction, de l'acide alkylphosphinique et un solvant insoluble dans l'eau ou peu soluble dans l'eau.

11. Procédé selon la revendication 10, **caractérisé en ce que** le réactif d'extraction pour la première solution d'extraction (2) est l'acide bis(2,4,4-triméthylpentyl)phosphinique.

12. Procédé selon l'une quelconque des revendications précédentes, **caractérisé en ce que** la première eau de lavage (6) contenant principalement du nickel, obtenue à partir du premier stade de lavage (B), est combinée à la solution d'alimentation d'extraction (1) pour le stade d'extraction (A).

13. Procédé selon l'une quelconque des revendications précédentes 1 à 11, **caractérisé en ce que** la première eau de lavage (6) contenant principalement du nickel, obtenue à partir du premier stade de lavage (B), est conduite vers un autre procédé que le procédé d'extraction liquide-liquide défini ci-dessus dans les stades d'extraction, de lavage et de réextraction (A, B, C et D).

14. Procédé selon l'une quelconque des revendications précédentes, **caractérisé en ce que** dans le stade d'extraction (A), la solution d'alimentation d'extraction (1) est mise en contact par mélange avec la première solution d'extraction (2), et, en même temps, le pH est ajusté au-dessus de 4, de préférence dans la plage de 4 à 6, en une ou plusieurs étapes.

15. Procédé selon l'une quelconque des revendications précédentes, **caractérisé en ce que** la solution d'alimentation d'extraction (1) contient des cations de cobalt, magnésium et nickel tandis que le contre-ion est un ion sulfate.

Fig. 1. pH-isotherm of Cyanex 272

**Fig. 2. Process cycle of the invention**

1. Extraction feed solution
2. First extraction solution
3. Raffinate
4. Second extraction solution
5. First washing solution
6. First wash water
7. Third extraction solution
8. Second washing solution
9. Second wash water
10. Fourth extraction solution
11. Back-extraction solution
12. Product solution
13. Fifth extraction solution

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4376653 A

- US 5855858 A

**Non-patent literature cited in the description**

- **C. BOURGET.** *Hydrometallurgy,* 2005, vol. 77, 203-218